# EUROPÄISCHE PATENTSCHRIFT

(11) **EP 1 344 423 B1**
(45) Veröffentlichungstag und Bekanntmachung des Hinweises auf die Patenterteilung: **27.02.2008**
(21) Anmeldenummer: 01271777.3
(22) Anmeldetag: 12.11.2001
(51) Int. Cl.: H04Q 11/04

(54) **VERFAHREN ZUM PAKETBASIERTEN ANSCHLUSS VON KLASSISCHEN ISDN/PSTN-TEILNEHMERN AN EIN VERMITTLUNGSSYSTEM**
DEVICE AND METHOD FOR THE PACKET-BASED ACCESS OF CLASSICAL ISDN/PSTN SUBSCRIBERS TO A SWITCHING SYSTEM
DISPOSITIF ET PROCEDE PERMETTANT DE CONNECTER EN MODE PAQUETS DES ABONNES A DES RESEAUX ISDN/PSTN CLASSIQUES A UN SYSTEME DE COMMUTATION

(30) Priorität: 18.12.2000 DE 10063081
(43) Veröffentlichungstag der Anmeldung: 17.09.2003
(73) Patentinhaber: Nokia Siemens Networks GmbH & Co. KG, 81541 München (DE)
(72) Erfinder: LÖBIG, Norbert, 64291 Darmstadt (DE)
(86) Internationale Anmeldenummer: PCT/DE2001/004238
(87) Internationale Veröffentlichungsnummer: WO 2002/051195

(56) Entgegenhaltungen:
- EP-A- 0 966 145
- LAKSHMI-RATAN R A: "THE LUCENT TECHNOLOGIES SOFTSWITCH - REALIZING THE PROMISE OF CONVERGENCE" BELL LABS TECHNICAL JOURNAL, Bd. 4, Nr. 2, April 1999 (1999-04) - Juni 1999 (1999-06), Seiten 174-195, XP000851517 ISSN: 1089-7089
- HUITEMA C ET AL: "AN ARCHITECTURE FOR RESIDENTIAL INTERNET TELEPHONY SERVICE" IEEE NETWORK, Bd. 13, Nr. 3, Mai 1999 (1999-05) - Juni 1999 (1999-06), Seiten 50-56, XP000870631 ISSN: 0890-8044
- ARAZI D: "VOICE OVER DSL" FUNKSCHAU, Bd. 72, Nr. 24, 12. November 1999 (1999-11-12), Seiten 64-66, XP000940343 ISSN: 0016-2841

## Beschreibung

Die Erfindung betrifft ein Verfahren gemäß dem Oberbegriff von Patentanspruch 1.

Zum Anschluß von klassischen analogen und ISDN Teilnehmern sowie Nebenstellenanlagen kommen Teilnemeranschlußkonzentratoren (Remote Switching Units, RSU) oder Teilnehmeranschlußnetze (Access Networks, AN) zum Einsatz. Beide stellen vermittlungsstellenexterne Einrichtungen dar, die über konzentrierende Schnittstellen an die peripheren Einrichtungen der Vermittlungsstelle angebunden sind.

Die Teilnehmeranschlußkonzentratoren /Teilnehmeranschlußnetze haben gemäß ihrer jeweiligen Definition ausgeprägte Mechanismen zur Heranführung der Teilnehmersignalisierung an die peripheren Einrichtungen des Vermittlungssystems. Zugleich sind Signalisierungsmöglichkeiten zur Steuerung des Teilnehmeranschlußkonzentrators /Teilnemeranschlußnetzes selbst vorgesehen. Diese betreffen zum Beispiel die Durchschaltung von Sprachkanälen des Teilnehmeranschlusses bzw. der Nebenstelle auf Sprachkanäle der Schnittstelle des Teilnehmeranschlußkonzentrators /Teilnehmeranschlußnetzes zu den peripheren Einrichtungen des Vermittlungsknotens. Auch der Betriebszustand von Teilnehmeranschluß und Nebenstelle wird auf diesem Wege zwischen Teilnehmeranschlußkonzentrator /Teilnehmeranschlußnetz und dem Vermittlungssystem abgeglichen.

Der Austausch der Teilnehmersignalisierung und Steuerungsinformation erfolgt in der Regel nachrichtenbasiert in der durch die Schnittstellendefinition vorgegebenen Weise. Typischerweise ist die gesamte Schnittstelle PCM-basiert, und es werden gewisse Zeitschlitze reserviert für die nachrichtenbasierte Übertragung von Teilnehmer- /Nebenstellensignalisierung und Steuerungsinformation.

Als Beispiel einer konzentrierenden Schnittstelle zwischen einem Teilnehmeranschlußnetz und einer Ortsvermittlungsstelle sei die V5.2-Schnittstelle genannt. Diese sieht vor, dass ISDN-Signalisierung, ISDN-Paketdaten auf dem D-Kanal, nachrichtenbasierte analoge Signalisierung (PSTN) in gemäß Standardvorgaben definierbaren Zeitschlitzen der Schnittstelle übertragen werden. Zur Steuerung des Teilnehmeranschlußnetzes sind Signalisierzangsprotokolle vorgesehen, die die Durchschaltung von Informationen durch das Teilnehmeranschlußnetz, den Abgleich von Port und PCM-Streckenzuständen sowie die Ersatzschaltung von ausgefallenen Signalisierungskanälen betreffen.

Proprietäre nachrichtenbasierte konzentrierende Schnittstellen können sich hinsichtlich der Definition zwar wesentlich von den Vorgaben des V5.2-Standards unterscheiden. Allen nachrichtenbasierten Schnittstellen zu Teilnehmeranschlüßkonzentratoren /Teilnehmeranschlußnetzen ist jedoch gemeinsam, daß sie Teilnehmersignalisierunginformationen (ISDN Signalisierungsnachrichten, ISDN-Paketdaten, PSTN-Nachrichten) sowie Steuerungsinformationen zur Durchschaltung oder zum Portzustandsabgleich in gewissen Zeitschlitzen einer TDM-basierten Schnittstelle übertragen.

Mit der Konvergenz von paketbasierten Netzen und TDM-Netzen stellt sich das Problem der Bedienung von klassischen analogen und ISDN-Teilnehmern sowie Nebenstellenanlagen über paketbasierte Übertragungsverfahren, - Siehe hierzu auch EP-A-0 966 145.

Über xDSL-Strecken zum Teilnehmeranschluß oder über Kabelnetze kann ein hocheffizienter Zugriff auf das Internet erfolgen. Damit steht im Teilnehmerbereich genügend Bandbreite zur Verfügung, um schmalbandigen klassischen Telephonie-/Faxverkehr additiv über die gleiche Zugangsleitung abwickeln zu können. Aus Sicht des Teilnehmers soll damit additive Anschließbarkeit konventioneller Teilnehmerendgeräte und Nebenstellenanlagen möglich sein. Zusätzlich sollten hierbei alle aus den klassischen PSTN/ ISDN-Netzen bekannte Teilnehmerleistungsmerkmale verfügbar bleiben. Die für den Vermittlungsverkehr notwendigen Nutzdaten werden jedoch im Unterschied zu der Situation eines Teilnehmeranschlußkonzentrators /Teilnehmeranschlußnetzes paketbasiert übertragen. Gleiches gilt für die Signalisierung.

In dieser Situation ergibt sich die Problematik, klassische Teilnehmer oder Nebenstellen (also POTS, ISDN BA, ISDN PRI), die über Teilnehmerabschlußvorrichtungen (z. B. IAD einer xDSL-Strecke, Set-Top-Box eines Kabelnetzes) mit Zugriff zu einem Paketnetz vermittlungstechnisch bedient werden, derart anzuschließen, dass alle klassischen Teilnehmerleistungsmerkmale (inklusive D-Kanal-Paketdaten) prinzipiell verfügbar sind. Weiterhin sollte die Wiederverwendbarkeit der HW- und SW-Funktionen einer klassischen Vermittlungsstelle gegeben sein, Nutzdatenströme sollten vorzugsweise paketbasiert geführt werden oder optional via TDM-Technik in die Vermittlungsstelle hereingeführt werden können sowie Signalsierungsinformationen und ISDN-D-Kanal-Paketdaten paketbasiert zur Vermittlungsstelle übertragen werden können.

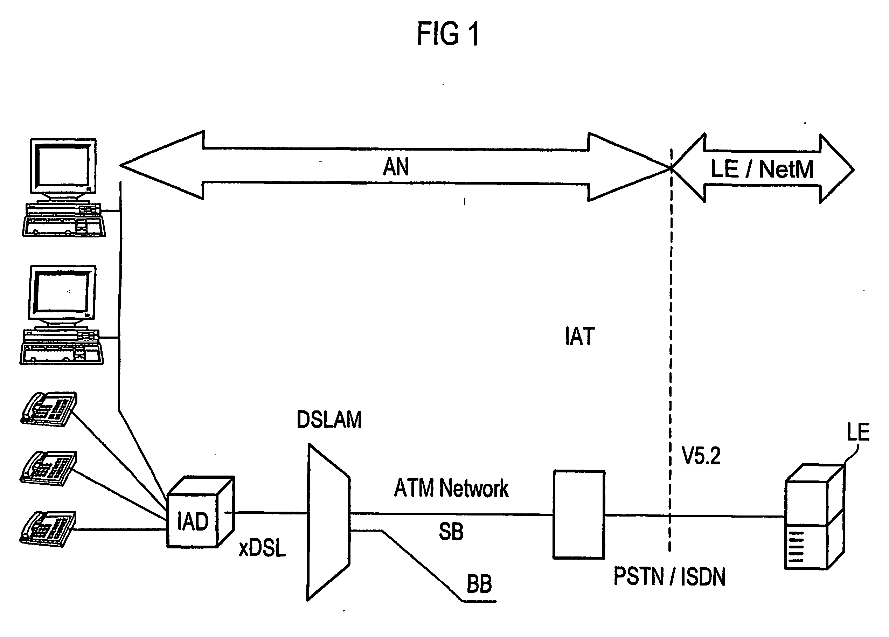

Beim Stand der Technik werden zur Lösung dieser Problematik die genannten klassischen Teilnehmer als Teil eines Teilnehmeranschlußnetzes geführt. Dieses weist zentrale Komponenten (z.B. IAT) auf, die die Umsetzung des schmalbandigen Nutzdatenstroms in TDM-Technik vornehmen und Signalisierung und Nutzdatenströme in Form einer V5.2-Schnittstelle bereitstellen. Die Nutzdatenströme werden dann in einer konventionellen Ortsvermittlungsstelle des PSTN /ISDN-Netzes bearbeitet. Breitbandiger Verkehr wird durch geeignete vorgelagerte Multiplexeinrichtungen ab- und zugeführt. Die entsprechenden Verhältnisse sind in Fig. 1 schematisch aufgezeigt.

Demgemäß ist ein Teilnehmerzugangsnetz AN aufgezeigt, das Informationenen einer Mehrzahl von Teilnehmerendgeräten den peripheren Einrichtungen einer Vermittlungsstelle LE zuführt. Als Teilnehmerabschlußvorrichtung ist eine Vorrichtung IAD vorgesehen, die spezifische Funktionen von xDSL-Übertragungsverfahren unterstützt. In einem Multiplexer DSLAM werden schmalbandige von breitbandigen Informationen getrennt sowie die xDSL Strecke abgeschlossen. Die Sprach- und Signalisierungsinformationen werden IP basiert über ein ATM-Netz als Träger einer Einrichtung IAT zugeführt,die die Kopfstelle des Teilnehmerzugangsnetzes AN bildet. Letztere leitet die Sprach- und Signalisierungsinformationen über eine V5.2 Schnittstelle einer Ortsvermittlungsstelle LE zu.

Die Vorteile des dort aufgezeigten Konzeptes liegen zum einen in der Nutzung einer bestehenden konzentrierenden Schnittstelle und zum anderen in der Verfügbarkeit aller durch die Vermittlungsstelle unterstützten Teilnehmerleistungsmerkmale. Der entscheidende Nachteil hingegen liegt in der Nutzung von TDM-Technik in einer im Umfeld konvergenter Netze tätigen Vermittlungsstelle. Hinzu kommt eine Verschlechterung der Sprachqualität durch die gegebenenfalls vermeidbare Umsetzung des Nutzdatenstroms zwischen TDM- Technik mit Codec G.711 und der paketbasierten Übertragung mittels einem i.a. komprimierenden Codec wie z.B. G.723.1.

Der Erfindung liegt die Aufgabe zugrunde, einen Weg aufzuzeigen, wie klassische Teilnehmer mit einfachen Mitteln über paketbasierte Übertragungsverfahren an eine Vermittlungsstelle angebunden werden können und in Ausfallsituationen von-Kommunikationswegen stabile Verbindungen erhalten werden können.

Die Erfindung wird ausgehend von den im Oberbegriff von Patentanspruch 1 angegebenen Merkmale durch die Merkmale des kennzeichnenden Teils gelöst.

Vorteilhaft an der Erfindung ist insbesondere, daß die teilnehmernahe Teilnehmerabschlußeinrichtung bei Verlust der Kommnikationsmöglichkeit mit der Vermittlungsstelle selbstständig versucht, diese über eine Mehrzahl verfügbarer Wege wieder zu etablieren. Unzulässige Bereitstellung vermittlungstechnischer Ressourcen, wie zum Beispiel die Durchschaltung eines Nutzkanals zu einem fernen Teilnehmer werden im Falle des Kommunikationsverlusts der Teilnehmerabschlußeinrichtung mit der Vermittlungsstelle ebenfalls selbständig durch die Teilnehmerabschlußvorrichtung aufgehoben.

Ein weiterer Vorteil ist dadurch gegeben, daß die Vermittlungsstelle aktiv alle Teilnehmerabschlußvorrichtungen zyklisch auf Verfügbarkeit überprüft, wobei insbesondere bereits als nicht verfügbar erkannten Ports an Teilnehmerabschlußeinrichtungen und Ports mit vermittlungstechnischer Aktivität (z. B. Ports mit durchgeschalteten User Channels) überprüft werden. Dies hat ein aktuelles Zustandsabbild der Verfügbarkeit im Vermittlungssystem zur Folge und senkt damit die Blindlast, die durch das versuchsweise Belegen nicht verfügbarer Ports entstünde. Ferner können Ports nach Reparatur automatisch und schnell wieder vermittlungstechnisch erreichbar geschaltet werden und bereits durchgeschaltete Verbindungen, bei denen eine der beteiligten Teilnehmerabschlußeinrichtungen seitens des Vermittlungssystems nicht mehr signalisierungsmäßig erreicht werden kann, können schnell und zuverlässig ausgelöst werden, und die zugehörige Gebührenzählung kann damit angehalten werden.

Weiterhin vorteilhaft ist, daß bei Ausfall einer peripheren Komponente des Vermittlungssystems, die für den Vermittlungsbetrieb eines Ports an einer Teilnehmerabschlußvorrichtung notwendig ist, vermittlungstechnisch gebundene Ressourcen von unmittelbar betroffenen Verbindungen freigegeben werden können. Durch Abfrage der Durchschaltezustände in den Teilnehmerabschlußvorrichtungen und den beteiligten Media Gateways können jedoch Verbindungen im stabilen Gesprächszustand i.a. sogar über die Ausfallsituation hinaus erhalten werden.

Vorteilhafte Weiterbildungen der Erfindung sind in den Unteransprüchen angegeben.

Die Erfindung wird im folgenden anhand eines figürlich dargestellten Ausführungsbeispieles näher erläutert.

Es zeigen:
- Fig 1: die Verhältnisse im Teilnehmerzugangsnetz gemäß dem Stand der Technik,
- Fig 2: eine konzentrierende Schnittstelle mit zwangsweiser Nutzdatenwandlung,
- Fig 3: eine konzentrierende Schnittstelle ohne zwangsweise Nutzdatenwandlung,

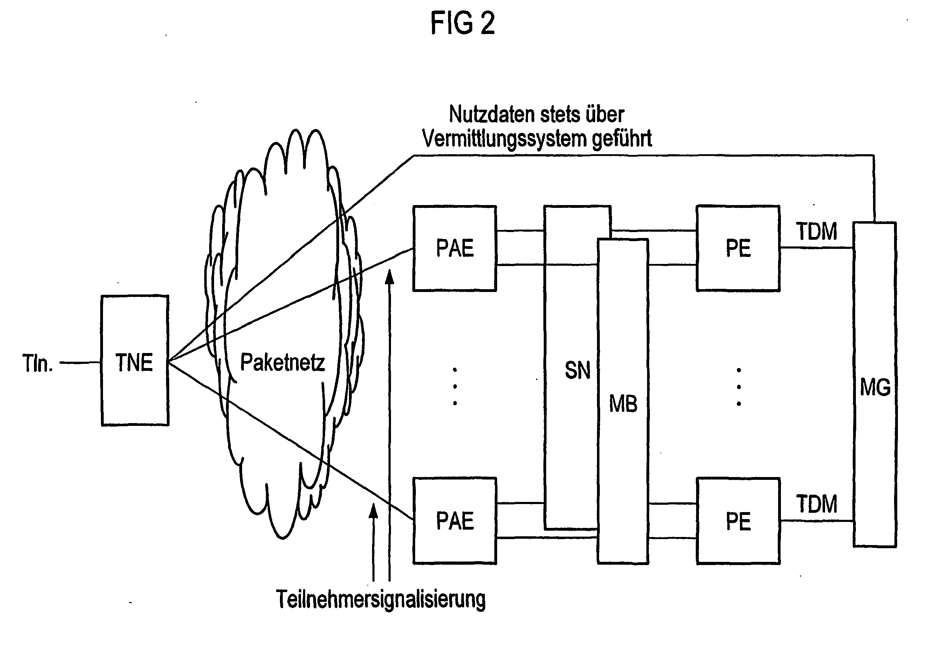

Fig. 2 zeigt eine Teilnehmerabschlußvorrichtung TNE mit den klassischen Teilnehmerschnittstellen (a/b Ader, SO, S2M). Diese terminiert die physikalischen Anschlußleitungen von POTS, ISDN BA und ISDN PRI. Die Teilnehmerabschlußvorrichtung TNE ist im wesentlichen identisch mit derjenigen des Standes der Technik gemäß Fig. 1. Sie hat Zugriff auf mindestens 2 periphere Adaptionseinrichtungen PAE der Vermittlungsstelle, wobei dieser Zugriff paketbasiert erfolgt.

Die hier weiterhin aufgezeigten peripheren Adaptionseinrichtungen PAE sind peripherer Bestandteil der Vermittlungsstelle. Sie haben Zugriff auf das Nachrichtenverteilsystem MB der Vermittlungsstelle. Zusätzlich kann Zugriff auf das Koppelfeld SN bestehen, wobei alternativ PCM-basierte Schnittstellen an der peripheren Adaptionseinrichtung PAE vorhanden sein können.

Letzlich sind periphere Einrichtungen PE der Vermittlungsstelle mit Zugriff zu Nachrichtenverteilsystem MB und Koppelnetz SN vorgesehen. Eine Mehrzahl der einer konzentrierenden Schnittstelle zugeordneten peripheren Einrichtungen PE stellt die vermittlungstechnische Funktion für diese konzentrierende Schnittstelle bereit. Zu diesem Zwecke terminiert eine periphere Einrichtung PE in herkömmlicher Anwendung eine Mehrzahl von PCM-Strecken dieser konzentrierenden Schnittstelle. Werden ISDN Paketdaten auf dem D-Kanal unterstützt, so wird von der genannten Mehrzahl der der konzentrierenden Schnittstelle zugeordneten peripheren Einrichtungen PE ebenso die Transferfunktion für D-Kanal-Paketdaten zum Packet Handler Interface bereitgestellt.

Mit dem Einschalten einer Teilnehmerabschlußvorrichtung TNE versucht diese, in Kommunikation mit einem der ihr zugeordneten peripheren Adaptionseinrichtungen PAE zu treten. Die Paketadressen der zugeordneten peripheren Adaptionseinrichtungen PAE können hierbei lokal in der Teilnehmerabschlußvorrichtung TNE hinterlegt sein. Wahlweise können sie mit dem Hochlauf bei dem für das Netz zuständigen Management System abgefragt werden. Mißlingt die Kommunikation mit der in Frage kommenden peripheren Adaptionseinrichtung PAE, so erfolgt ein erneuter Kommunikationsversuch mit einer weiteren zugeordneten peripheren Adaptionseinrichtung PAE. Im Mißerfolgsfalle wird der Kommunikationsversuch mit einer der peripheren Adaptionseinrichtung PAE zyklisch wiederholt.

Ist die Kommunikation zu einer peripheren Adaptionseinrichtung PAE hergestellt, so erfolgt die Teilnehmersignalisierung transparent für ISDN Teilnehmer und Nebenstellen. Dies bedeutet, daß die über den D-Kanal eintreffenden Nachrichten paketbasiert in Richtung der peripheren Adaptionseinrichtung PAE gesendet werden. An die peripheren Adaptionseinrichtung PAE gesendete Nachrichten enthalten die Paketadresse der Teilnehmerabschlußvorrichtung TNE ergänzt um die Kennung des betroffenen Ports bzw. eine Paketadresse, aus der der absendende D-Kanal eindeutig hervorgeht. Von der peripheren Adaptionseinrichtung PAE an die Teilnehmerabschlußvorrichtung TNE gesendete Nachrichten enthalten die Paketadresse der teilnehmernahen Einrichtung TNE ergänzt um die Kennung des betroffenen Ports bzw. eine Paketadresse, aus der der empfangende D-Kanal eindeutig hervorgeht.

Signalisierungsnachrichten und Paketdaten auf dem D-Kanal werden in gleicher Weise übertragen. Die Übertragung des ISDN L2 kann ungesichert erfolgen, was insbesondere in guten Paketnetzen vollkommen ausreichend ist. Zur Verbesserung der Übertragungsgüte (Nachrichtenreihenfolge, Delays) wird der ISDN L2 in der Teilnehmerabschlußvorrichtung TNE vorzugsweise abgeschlossen und ein gesichertes Protokoll zwischen dieser und der peripheren Adaptionseinrichtung PAE verwendet.

Für Teilnehmeranschlüsse mit analoger Signalisierung werden die Leitungssignale in der Teilnehmerabschlußvorrichtung TNE auf vermittlungstechnische Nachrichten umgesetzt bzw. in der Gegenrichtung vermittlungstechnische Nachrichten in Leitungssignale umgesetzt. Diese werden in gleicher Weise zwischen der Teilnehmerabschlußvorrichtung TNE und der peripheren Adaptionseinrichtung PAE ausgetauscht, wie es für Signalisierungsnachrichten der ISDN-Teilnehmer an der Teilnehmerabschlußvorrichtung TNE der Fall ist. Im Bedarfsfall kann ein vom ISDN-Fall abweichendes Protokoll verwendet werden. Die Adressierung des analogen Ports erfolgt über eine Paketadresse pro analogem Port oder über eine um eine Portkennung ergänzte Paketadresse für eine Mehrzahl von analogen Ports an der teilnehmernahen Einrichtung TNE.

Die Durchschalteaufträge eines Kanals für ein Port an der Teilnehmerabschlußvorrichtung TNE sowie gegebenenfalls Verfügbarkeitszustand des Ports werden zwischen Teilnehmerabschlußvorrichtung TNE und peripheren Adaptionseinrichtung PAE ausgetauscht. Hierzu wird ein paketbasiertes Protokoll verwendet, das die genannten Funktionen abdeckt.

Ist die konzentrierende Schnittstelle der Vermittlungsstelle derart ausgebildet, daß ein Port über mehrere Kommunikationskanäle zugleich Zugriff zum Vermittlungssystem hat, (was z. B. Load-sharing Betriebsweise der Fall ist), so werden Kommunikationsbeziehungen zwischen Teilnehmerabschlußvorrichtung TNE und mehreren peripheren Adaptionseinrichtung PAE aufgebaut und gleichzeitig im voranstehenden Sinne genutzt.

Zur Vereinfachung der Beschreibung wird im folgenden nur der Fall der Zuordnung eines Ports zu jeweils maximal einem Kommunikationskanal für ISDN-Signalsierung, ISDN-D-Kanal-Paketdaten und/oder PSTN-Signalsierung betrachtet, die alle über die gleiche peripheren Adaptionseinrichtung PAE geführt sind. Wird eine über eine peripheren Adaptionseinrichtung PAE laufende Kommunikationsbeziehung abgebrochen, versucht die Teilnehmerabschlußvorrichtung TNE zyklisch den Aufbau einer erneuten Kommunikationsbeziehung mit einer weiteren peripheren Adaptionseinrichtung PAE. Hierzu stoppt sie die den aktiven Ports zugeordneten paketbasierten Nutzdatenströme.

Die Funktionen der peripheren Adaptionseinrichtung PAE dienen der Anpassung der auf der Schnittstelle zwischen Teilnehmerabschlußvorrichtung TNE und peripheren Adaptionseinrichtung PAE verwendeten Nachrichten an die Bedürfnisse der dem TNE-Port zugeordneten konzentrierenden Schnittstelle:

Es erfolgt also insbesondere die Adreßumsetzung zwischen der für das TNE-Port verwendeten Adressierung und der vermittlungsstelleninternen Adresse des Ports auf der für das Port zuständigen konzentrierenden Schnittstelle. Ferner wird die Protokollkonvertierung der Teilnehmersignalisierung der in Richtung Teilnehmerabschlußvorrichtung TNE verwendeten Nachrichten auf das den jeweiligen Signalisierungskanälen der konzentrierenden Schnittstelle verwendete Protokoll vorgenommen.

Hiermit wird die Weiterschaltung der ISDN-Signalisierungsdaten zwischen peripheren Adaptionseinrichtungen PAE und den peripheren Einrichtungen PE ermöglicht. Diese erfolgt TDMbasiert über das Kopplenetz auf die peripheren Einrichtungen PE, welche die jeweilgen Signalisierungskanäle terminieren. Hierzu kommen im Systemhochlauf etablierte systeminteren NUC-Verbindungen (Nailed up Connections) zum Einsatz. Die Verteilung der Signalisierungsnachrichten der Teilnehmerabschlußvorrichtung TNE auf eine Mehrzahl von derartigen festen NUC-Verbindungen erfolgt mittels der zugehörigen konzentrierenden Schnittstelle, der Portadresse und dem Nachrichtentyp. Unterstützt das Nachrichtenverteilsystem einen hinreichend performanten Nachrichtentransfer zwischen peripherer Einrichtung PE und peripherer Adaptionseinrichtungm PAE, so kann die Nachrichtenübertragung per NUC und Koppelnetz auch entfallen und alternativ das Nachrichtenverteilsystem zur Übertragung der Signalisierungsnachrichten zwischen peripherer Einrichtung und peripherer Adaptionseinrichtung benutzt werden.

Damit schafft die peripheren Adaptionseinrichtung PAE die Voraussetzung dafür, daß in den zu der konzentrierenden Schnittstelle des Vermittlungssytems gehörigen peripheren Einrichtung PE die Signalisierung der Teilnehmer zu der Teilnehmerabschlußvorrichtung TNE in gleicher Weise eintrifft, als wäre sie über ein dazwischenliegendes Teilnehmerzugangsnetz AN über TDM-Technik herangeführt worden. Signalisierungsdaten werden in der der konzentrierenden Schnittstelle üblichen Weise verarbeitet. D-Kanal-Paketdaten werden zum Packet Handler Interface weitergeschaltet.

Die für die Steuerung der konzentrierenden Schnittstelle notwendige Signalisierung zur Bewirkung von Duchschaltungen und zum Abgleich des Portzustands erfolgt ebenfalls über eine periphere Adaptionseinrichtung PAE, wobei diese ebenfalls über über NUC oder über das Nachrichtenverteilsystem geführt werden.

Mit dem voranstehend genannten Verfahren werden 2 Typen von konzentrierenden Schnittstellen ermöglicht.

Die erste ist wie in Fig. 2 aufgezeigt, dadurch gekennzeichnet, daß sie die Nutzdatenkanäle der Ports an der Teilnehmerabschlußvorrichtung TNE stets über ein Media Gateway MG in eine der vermittlungstechnisch dem Call zugeordnete periphere Einrichtung PE hineinführt. Mit dieser Anschlußart werden insbesondere alle Teilnehmerleistungsmerkmale für das Port bereitgestellt (Konzentrierende Schnittstelle mit zwangsweiser Nutzdatenwandlung).

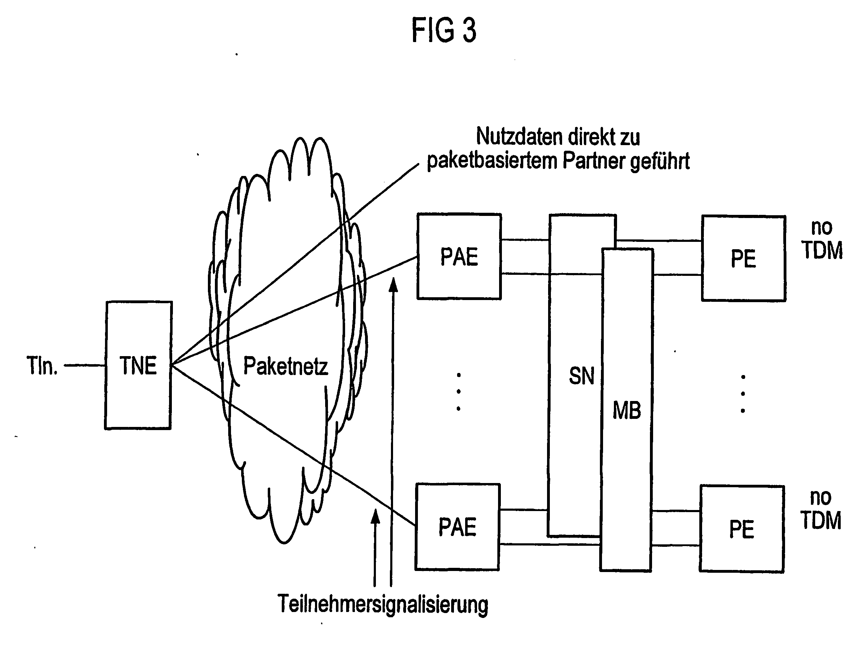

Der zweite Typ der konzentrierenden Schnittstelle verzichtet wie in Fig. 3 dargestellt, auf die unbedingte Wandlung des Nutzkanals auf TDM-Format und ermöglicht so den direkten Austausch der Nutzdaten zwischen 2 Teilnehmern an der Teilnehmerabschlußvorrichtung TNE unter Umgehung der Vermittlungsstelle. Dies kann mit Einschränkungen hinsichtlich der Verfügbarkeit der Teilnehmerleistungsmerkmale verbunden sein (Konzentrierende Schnittstelle ohne zwangsweise Nutzdatenwandlung).

Geben die peripheren Adaptionseinrichtung PE im Rahmen des Verbindungsaufbaus Durchschaltebefehle in Richtung des Teilnehmeranschlußkonzentrators, Teilnehmeranschlußnetzes aus, so werden diese in der peripheren Adaptionseinrichtung PAE auf Einstellbefehle an die teilnehmernahe Einrichtung TNE und das zwischengelagerte Media Gateways MG umgesetzt.

Werden komplexere Teilnehmerabschlußvorrichtungen (TNE-Varianten) eingesetzt, welche in Shelfs oder Schränken zusammengefaßt werden müssen und eventuell gemeinsam genutzte übergeordnete teilnehmernahe Funktionseinheiten und Übertragunseinrichtungen nutzen, so kann die hierfür erforderliche Funktionalität eines Teilnehmeranschlußnetzes ebenfalls durch die peripheren Adaptionseinrichtung PAE bereitgestellt werden. Die für diese Alarmierungs- und Maintenance-Funktionen notwendigen Datenstrukturen werden in der peripheren Adaptionseinrichtung PAE gehalten und gepflegt. Die notwendige Schnittstelle zum Management-System wird separat von der des Vermittlungssystems gehalten, zur vorteilhaften Reduktion der Komplexität des Gesamtsystems, das dann sowohl Funktionen einer Ortsvermittlungsstelle bereitstellt wie auch die eines Anschlußleitungsnetzes, ohne daß es letzteres als separate Einrichtung gibt.

## Patentansprüche

1. Verfahren zum Anschluß von klassischen analogen und ISDN Teilnehmern an ein Vermittlungssystem, wobei die Teilnehmersignalisierung zwischen einer Teilnehmerabschlußvorrichtung (TNE) und dem Vermittlungssystem paketbasiert über ein Netz übertragen wird und jeweils eine Mehrzahl derartiger Teilnehmer einer gemeinsamen Menge peripherer Einrichtungen (PE) des Vermittlungssystems zugeordnet sind,
**dadurch gekennzeichnet,**
**dass** wenigstens eine periphere Adaptionseinrichtung (PAE) vorgesehen wird, die in der Peripherie des Vermittlungssystems angeordnet ist und der Anpassung der auf der Schnittstelle zwischen Teilnehmerabschlußvorrichtung (TNE) und peripheren Adaptionseinrichtung (PAE) verwendeten Nachrichten an die Bedürfnisse der dem TNE-Port zugeordneten Menge peripherer Einrichtungen (PE) dienlich ist,
**daß** Software-Funktionen zur Ausfallbehandlung in der Teilnehmerabschlußvorrichtung (TNE), der wenigstens einen peripheren Adaptionseinrichtung (PAE) sowie den zugeordneten peripheren Einrichtungen (PE) des Vermittlungssytems vorgesehen werden,
**daß** durch das Zusammenwirken dieser Software-Funktionen zur Ausfallbehandlung die Ersatzschaltung und Wiederinbetriebnahme von ausgefallenen peripheren Einrichtungen (PE), peripheren Adaptionseinrichtungen (PAE) und Kommunikationswegen zu Teilnehmerabschlußvorrichtungen (TNE) gesteuert werden.

2. Verfahren nach Anspruch 1,
**dadurch gekennzeichnet,**
**dass** von der Teilnehmerabschlußvorrichtung (TNE) bei Verlust der Kommunikation über eine periphere Adaptionseinrichtung (PAE) die Kommunikation über eine weitere periphere Adaptionseinrichtung (PAE) aufgebaut wird.

3. Verfahren nach Anspruch 1, 2,
**dadurch gekennzeichnet,**
**dass** von der Teilnehmerabschlußvorrichtung (TNE) bei Verlust der Kommunikation über alle ihr zugeordneten peripheren Adaptionseinrichtung (PAE) versucht wird, die Kommunikation über eine weitere periphere Adaptionseinrichtung (PAE) zyklisch aufzubauen, die vermittlungstechnisch gebundenen Ressourcen freigegeben werden und getätigte Durchschaltungen von Nutzdatenströmen ihrer Anschlüsse aufgehoben werden.

4. Verfahren nach Anspruch 1 bis 3,
**dadurch gekennzeichnet,**
**dass** der Ausfall und die Wiederverfügbarkeit eines Anschlusses an der Teilnehmerabschlußvorrichtung dem Vermittlungssystem seitens der Teilnehmerabschlußvorrichtung (TNE) über die Kommunikation mit der peripheren Adaptionseinrichtung (PAE) gemeldet wird und das Abbild des Zustands eines Anschlusses in der Vermittlungsstelle geführt wird und die vermittlungstechnische Verfügbarkeit des Anschlusses im Vermittlungssystem beschreibt.

5. Verfahren nach Anspruch 4,
**dadurch gekennzeichnet,**
**dass** für die Meldung des Zustands eines Anschlusses an der Teilnehmerabschlußvorrichtung (TNE) an das Vermittlungssystem das MGCP Protokoll oder H.248 verwendet wird.

6. Verfahren nach einem der vorstehenden Ansprüche,
**dadurch gekennzeichnet,**
**dass** die an der Teilnehmerabschlußvorrichtung (TNE) als ausgefallen gemeldeten Anschlüssen zyklisch durch die periphere Adaptionseinrichtung (PAE) auf Wiederverfügbarkeit geprüft werden.

7. Verfahren nach Anspruch 6,
**dadurch gekennzeichnet,**
**dass** für die Überprüfung des Zustands eines Anschlusses an der Teilnehmerabschlußvorrichtung (TNE) durch die periphere Adaptionseinrichtung (PAE) des Vermittlungssystems das MGCP Protokoll oder H.248 verwendet wird.

8. Verfahren nach einem der vorstehenden Ansprüche,
**dadurch gekennzeichnet,**
**dass** vermittlungstechnisch aktive Anschlüsse an der Teilnehmerabschlußvorrichtung (TNE) zyklisch durch die periphere Adaptionseinrichtung (PAE) auf Verfügbarkeit geprüft werden, wobei bei festgestellter Nichtverfügbarkeit das Auslösen der vermittlungstechnischen Durchschaltungen und Transaktionen erfolgt sowie das Anhalten der Gebührenzählung des betroffenen Anschlusses in der Vermittlungsstelle.

9. Verfahren nach Anspruch 8,
**dadurch gekennzeichnet,**
**dass** für die Überprüfung vermittlungstechnisch aktiver Anschlüsse an der Teilnehmerabschlußvorrichtung (TNE) durch die periphere Adaptionseinrichtung (PAE) des Vermittlungssystems das MGCP Protokoll oder H.248 verwendet wird.

10. Verfahren nach einem der vorstehenden Ansprüche,
**dadurch gekennzeichnet,**
**dass** im Falle von Ausfällen von peripherer Adaptionseinrichtung (PAE) stabile Verbindungen erhalten werden durch redundante Speicherung der Durchschaltezustände in einer redundanten peripheren Adaptionseinrichtung (PAE) oder durch Rückgewinnung der Durchschaltezustände über Abfrage der beteiligten Teilnehmerabschlußvorrichtungen und Media Gateways nach Umschalten auf eine weitere periphere Adaptionseinrichtung (PAE).

11. Verfahren nach einem der vorstehenden Ansprüche,
**dadurch gekennzeichnet,**
**dass** im Falle des Ausfalls einer peripheren Einrichtung (PE) vermittlungstechnische Durchschaltungen nicht mehr bedienbarer Verbindungen bereinigt werden durch Ausnutzung der Speicherung der Durchschaltezustände in den peripheren Adaptionseinrichtungen (PAE) oder durch Rückgewinnung der Durchschaltezustände über Abfrage der beteiligten Teilnehmerabschlußvorrichtungen und Media Gateways.

12. Verfahren nach Anspruch 10 oder 11,
**dadurch gekennzeichnet,**
**dass** zur Rückgewinnung der Durchschaltezustände vermittels Abfrage der beteiligten Teilnehmerabschlußvorrichtungen (TNE) und Media Gateways das MGCP Protokoll oder H.248 verwendet wird.

13. Verfahren nach einem der vorstehenden Ansprüche,
**dadurch gekennzeichnet,**
**dass** Ausfall einer Teilnehmerabschlußvorrichtung (TNE) durch zyklisch erfolgende Kommunikationsversuche einer peripheren Adaptionseinrichtung (PAE) erkannt wird und auf die Nichtverfügbarkeit der zugeordneten Anschlüsse abgebildet wird.

14. Verfahren nach einem der vorstehenden Ansprüche,
**dadurch gekennzeichnet,**
**dass** im Vermittlungssystem als vermittlungstechnisch nicht verfügbare Anschlüsse geführte Ports einer Teilnehmerabschlußvorrichtung vermittlungstechnisch auch bei terminierenden Rufen nicht belegt werden.

## Claims

1. Method for connecting conventional analogue and ISDN subscribers to a switching system, with the subscriber signalling between a subscriber terminal device (TNE) and the switching system being transmitted packet-based via a network and with pluralities of such subscribers, each plurality being assigned to a common set of peripheral devices (PE) of the switching system,
**characterised in that**,
at least one peripheral adaptation device (PAE) is provided, that is arranged in the periphery of the switching system and serves to adapt the messages used on the interface between the subscriber terminal device (TNE) and the peripheral adaptation device (PAE) to the requirements of the set of peripheral devices (PE) assigned to the TNE port,
software functions for dealing with failures are provided in the subscriber terminal device (TNE), in the at least one peripheral adaptation device (PAE), and in the associated peripheral devices (PE) of the switching system,
by the interaction of these software functions for dealing with failures the alternative switching and restoration of faulty peripheral devices (PE), peripheral adaptation devices (PAE), and communication paths to subscriber terminal devices (TNE)are controlled.

2. Method in accordance with claim 1,
**characterised in that**,
in the event of loss of communication via a peripheral adaptation device (PAE) communication via a further peripheral adaptation device (PAE) is established by the subscriber terminal device (TNE).

3. Method in accordance with claim 1, 2,
**characterised in that**,
in the event of loss of communication via all the peripheral adaptation devices (PAE) assigned to it, the subscriber terminal device (TNE) cyclically attempts to establish communication via a further peripheral adaptation device (PAE), the associated call processing resources are released, and the established through connections of user data of its access ports are terminated.

4. Method in accordance with claims 1 to 3,
**characterised in that**,
the failure and the re-availability of an access port at the subscriber terminal device is reported to the switching system by the subscriber terminal device (TNE) via the communication with the peripheral adaptation device (PAE) and the image of the status of an access port is maintained in the exchange which describes the availability of the access port for call processing in the switching system.

5. Method in accordance with claim 4,
**characterised in that**,
the MGCP protocol or H.248 is used for reporting the status of an access port at the subscriber terminal device (TNE) to the switching system.

6. Method in accordance with one of the preceding claims,
**characterised in that**,
the access ports reported at the subscriber terminal device (TNE) as faulty are cyclically checked by the peripheral adaptation device (PAE) with respect to re-availability.

7. Method in accordance with claim 6,
**characterised in that**,
the MGCP protocol or H.248 is used to check the status of an access port at the subscriber terminal device (TNE) by the peripheral adaptation device (PAE) of the switching system.

8. Method in accordance with one of the preceding claims,
**characterised in that**,
access ports at the subscriber terminal device (TNE) that are active with regard to call processing are cyclically checked for availability by the peripheral adaptation device (PAE), and if non-availability is determined, the through connections and transactions are cleared down and the call charge metering for the relevant access port is stopped in the exchange.

9. Method in accordance with claim 8,
**characterised in that**,
the MGCP protocol or H.248 is used for checking of call processing active access ports at the subscriber terminal device (TNE) by the peripheral adaptation device (PAE) of the switching system.

10. Method in accordance with one of the preceding claims,
**characterised in that**,
in the event of failures of peripheral adaptation devices (PAE), stable connections are saved by redundant storage of switching states in a redundant peripheral adaptation device (PAE) or by recovery of the switching states by interrogating the involved subscriber terminal devices and media gateways after switching to a further peripheral adaptation device (PAE).

11. Method in accordance with one of the preceding claims,
**characterised in that**,
in the event of a failure of a peripheral device (PE), the call processing related through connections of connections that can no longer be operated are cleared by utilising the storage of the switching states in the peripheral adaptation devices (PAE) or by recovery of the switching states by interrogating the involved subscriber terminal devices and media gateways.

12. Method in accordance with claim 10 or 11,
**characterised in that**,
the MGCP protocol or H.248 is used for the recovery of the switching states by interrogating the involved subscriber terminal devices (TNE) and media gateways.

13. Method in accordance with one of the preceding claims,
**characterised in that**,
the failure of a subscriber terminal device (TNE) is detected by cyclic communication attempts by a peripheral adaptation device (PAE) and is mapped to the non-availability of the associated access ports.

14. Method in accordance with one of the preceding claims,
**characterised in that**,
ports of a subscriber terminal device marked in the switching system as access ports not available for call processing are not seized even for terminating calls.

## Revendications

1. Procédé pour le raccordement d'abonnés analogiques classiques et ISDN à un système de commutation, la signalisation d'abonné étant transmise, entre un dispositif de terminaison d'abonné (TNE) et le système de commutation, en mode paquet au moyen d'un réseau et respectivement une pluralité de tels abonnés étant attribuée à un ensemble commun de dispositifs périphériques (PE) du système de commutation,
**caractérisé en ce que**
au moins un dispositif d'adaptation périphérique (PAE) est prévu, lequel est disposé dans la périphérie du système de commutation et sert à l'adaptation des messages, utilisés sur l'interface entre le dispositif de terminaison d'abonné (TNE) et le dispositif d'adaptation périphérique (PAE), aux exigences de l'ensemble attribué au port TNE, de dispositifs périphériques (PE),
**en ce que** des fonctions de logiciel sont prévues pour le traitement de défaillance dans le dispositif de terminaison d'abonné (TNE), dans le au moins un dispositif d'adaptation périphérique (PAE) et dans les dispositifs périphériques (PE) attribués du système de commutation,
**en ce que** la mise en circuit de remplacement et la remise en service de dispositifs périphériques (PE), de dispositifs d'adaptation périphériques (PAE) et de voies de communication vers des dispositifs de terminaison d'abonné (TNE) qui sont devenus défaillants sont commandés par la coopération de ces fonctions de logiciel pour le traitement des défaillances.

2. Procédé selon la revendication 1,
**caractérisé en ce que**
le dispositif de terminaison d'abonné (TNE) établit la communication via un autre dispositif d'adaptation périphérique (PAE), en cas de perte de la communication via un dispositif d'adaptation périphérique (PAE).

3. Procédé selon les revendications 1, 2
**caractérisé en ce que**
le dispositif de terminaison d'abonné (TNE) tente en cas de perte de la communication via tous les dispositifs d'adaptation périphériques (PAE) qui lui sont attribués d'établir de façon cyclique la communication via un autre dispositif d'adaptation périphérique (PAE), libère les ressources liées au niveau de la commutation et supprime des commutations établies, de flux de données utiles sur ses raccordements.

4. Procédé selon l'une des revendications 1 à 3,
**caractérisé en ce que**
la défaillance et la nouvelle disponibilité d'un raccordement sur le dispositif de terminaison d'abonné sont signalées au système de commutation par le dispositif de terminaison d'abonné (TNE) via la communication avec le dispositif d'adaptation (PAE) périphérique et la représentation de l'état d'un raccordement est gérée au central et décrit la disponibilité du raccordement au niveau de commutation dans le système de commutation.

5. Procédé selon la revendication 4,
**caractérisé en ce que**
le protocole MGCP ou H.248 est utilisé pour la signalisation de l'état d'un raccordement sur le dispositif de terminaison d'abonné (TNE) au système de commutation.

6. Procédé selon l'une quelconque des revendications précédentes,
**caractérisé en ce que**
les raccordements signalés comme étant défaillants sur le dispositif de terminaison d'abonné (TNE) sont testés de façon cyclique par le dispositif d'adaptation (PAE) périphérique en ce qui concerne la nouvelle disponibilité

7. Procédé selon la revendication 6,
**caractérisé en ce que**
le protocole MGCP ou H.248 est utilisé pour le contrôle de l'état d'un raccordement sur le dispositif de terminaison d'abonné (TNE) par le dispositif d'adaptation périphérique (PAE) du système de commutation.

8. Procédé selon l'une quelconque des revendications précédentes,
**caractérisé en ce que**
des raccordements actifs au niveau de la commutation sur le dispositif de terminaison d'abonné (TNE) sont testés de façon cyclique en ce qui concerne la disponibilité par le dispositif d'adaptation périphérique (PAE), le déclenchement des connexions et transactions au niveau de la commutation s'effectuant en cas de non-disponibilité constatée ainsi que l'arrêt de la taxation du raccordement concerné au central de commutation.

9. Procédé selon la revendication 8,
**caractérisé en ce que**
le protocole MGCP ou H.248 est utilisé pour le contrôle de raccordements actifs au niveau de la commutation sur le dispositif de terminaison d'abonné (TNE) par le dispositif d'adaptation périphérique (PAE) du système de commutation.

10. Procédé selon l'une quelconque des revendications précédentes,
**caractérisé en ce que**,
dans le cas de défaillances du dispositif d'adaptation périphérique (PAE), des liaisons stables sont obtenues par un stockage redondant des états de connexion dans un dispositif d'adaptation périphérique (PAE) redondant ou par récupération des états de connexion par l'interrogation des dispositifs de terminaison d'abonnés concernés et des Media Gateways après la commutation sur un autre dispositif d'adaptation périphérique (PAE).

11. Procédé selon l'une quelconque des revendications précédentes,
**caractérisé en ce que**,
dans le cas de la défaillance d'un dispositif périphérique (PE), des connexions, au niveau de la commutation, de liaisons qui ne peuvent plus être utilisées sont corrigées par l'utilisation du stockage des états de connexion dans les dispositifs d'adaptation périphériques (PAE) ou par la récupération des états de connexion par l'interrogation des dispositifs de terminaison d'abonnés et des Media Gateways concernés.

12. Procédé selon la revendication 10 ou 11,
**caractérisé en ce que**
le protocole MGCP ou H.248 est utilisé pour la récupération des états de connexion par interrogation des dispositifs de terminaison d'abonnés (TNE) et des Media Gateways concernés.

13. Procédé selon l'une quelconque des revendications précédentes,
**caractérisé en ce que**
la défaillance d'un dispositif de terminaison d'abonné (TNE) est détectée par des essais de communication s'effectuant de façon cyclique d'un dispositif d'adaptation périphérique (PAE) et est reproduite sur la non-disponibilité des raccordements attribués.

14. Procédé selon l'une quelconque des revendications précédentes,
**caractérisé en ce que**,
des ports, guidés dans le système de commutation sous forme de raccordements non disponibles au niveau de la commutation, d'un dispositif de terminaison d'abonné ne sont pas occupés au niveau de la commutation même dans le cas d'appels en terminaison.
